# EUROPEAN PATENT SPECIFICATION

(11) **EP 3 278 654 B1**
(45) Date of publication and mention of the grant of the patent: **16.09.2020**
(21) Application number: 17182751.2
(22) Date of filing: 24.07.2017
(51) Int. Cl.: A01D 43/063

(54) **LAWN MOWER WITH A SYSTEM FOR DETECTING AND SIGNALING THE COLLECTING BAG CONDITION**
RASENMÄHER MIT EINEM SYSTEM ZUR ERFASSUNG UND SIGNALISIERUNG DES SAMMELBEUTELZUSTANDS
TONDEUSE À GAZON AVEC UN SYSTÈME DE DÉTECTION ET DE SIGNALISATION DE LE ÉTAT DE SAC DE COLLECTE

(30) Priority: 03.08.2016 IT 201600081967
(43) Date of publication of application: 07.02.2018
(73) Proprietor: Stiga S.p.A. in breve anche St. S.p.A., 31033 Castelfranco Veneto (TV) (IT)
(72) Inventor: PIETROBON, Christian, 36022 S. GIUSEPPE DI CASSOLA (VI) (IT)
(74) Representative: Mittler, Andrea

(56) References cited:
- DE-U1- 9 310 940
- GB-A- 2 280 837
- JP-A- 2005 348 653
- JP-A- 2012 069 423
- US-A- 5 321 939

## Description

The present invention relates to a lawn mower with a system for detecting and signaling the collecting bag condition.

Lawn mowers provided with systems for signaling the full bag condition are well known. Such systems are adapted to signal to the operator that the grass collecting bag is completely filled up with grass clippings and must therefore be replaced so that the lawn mower can operate optimally.

Mechanical systems exist, which take advantage of some phenomena resulting from the lawn mower's operation, such as the air flux generated by the rotation of the cutting blades circulating inside the bag. For example, a flap arranged on a wall of the collecting bag may signal to the operator if the bag is full. In fact, in case the bag is not completely full, the flap is open, being lifted up by said air flux; differently, when the bag is completely filled up, the flap is lowered down because there is no more free space inside the bag for the circulation of air. The closing of the flap, therefore, indicates the complete filling of the collecting bag. Such systems are very reliable, but often they are not so evident to be noticed by the operator.

For such reason, electronic systems configured to warn the operator in a more evident manner have become common; said electronic systems comprise at least one sensor adapted to detect a determined physical quantity. For example, patent JP-2005348653 describes a pressure sensor adapted to detect the pressure of the grass contained inside the bag. If the amount of pressure detected exceeds a certain threshold, the operator will be warned about the full bag condition.

Patent US-5321939 describes instead a photoelectric sensor arranged in the proximity of the outlet of a grass output tube above the container for collecting grass. A signal duration detector determines when a light blocking state lasts longer than a defined period, generating a warning signal.

Another example is a sensor (limit switch, pressure sensor or other), described in JP-1269423, which is placed in contact with the grass collecting bag to allow the bulging amount of the bag to be detected depending on the filling state of the bag.

DE-9310940 discloses a lawn mower provided with signaling means suitable to advise the operator about the bag condition.

It is the object of the present invention to achieve a lawn mower provided with a detection system which may also provide further information on the bag condition and which is both reliable and such to warn the operator in an evident manner.

In accordance with the invention such object is attained with a lawn mower as disclosed in claim 1.

These and other features of the present invention will become more apparent from the following detailed description of a practical embodiment thereof, shown for non-limiting purposes in the accompanying Figures, in which:
Figure 1 shows a lawn mower according to the present invention comprising an apparatus for detecting and signaling the grass collecting bag conditions;
Figures 2, 3 show sectional views of a first embodiment of the apparatus for detecting and signaling the conditions of the bag of the lawn mower of Fig. 1, in two different positions;
Figures 4, 5 show sectional views of a second embodiment of the detection and signaling apparatus of Fig. 1, in two different positions;
Figures 6-9 show operating steps of the first embodiment of the detection and signaling apparatus of Figs. 2, 3.

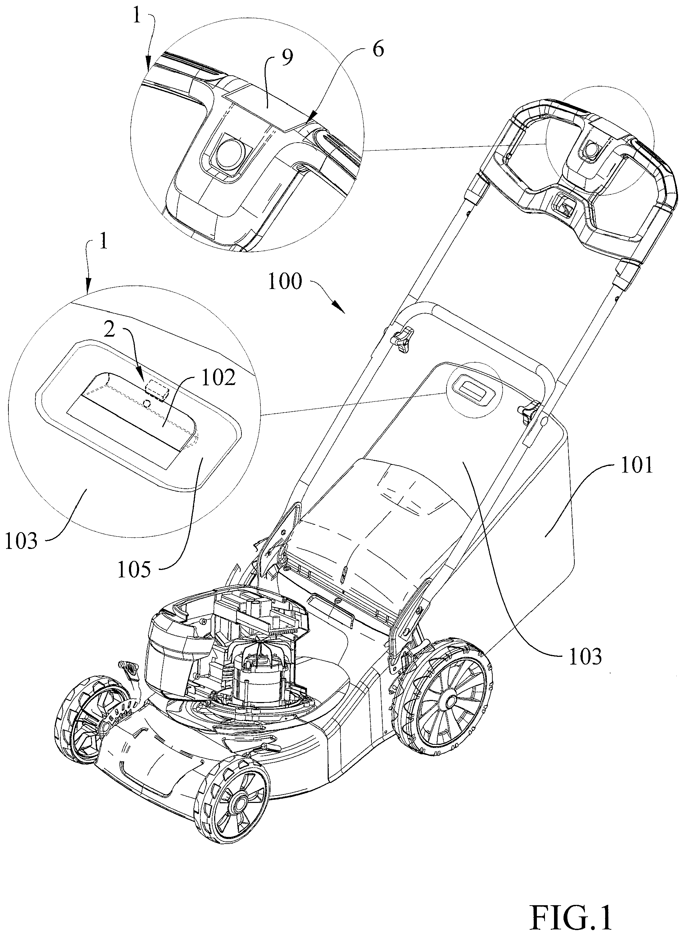

In Fig. 1 a lawn mower 100 is shown, according to the present invention, provided with a bag 101 for collecting of grass. The bag 101 comprises a movable member 102, typically a flap, arranged on a wall 103 of the bag 101, preferably on a wall 103 in the rear part of the bag 101.

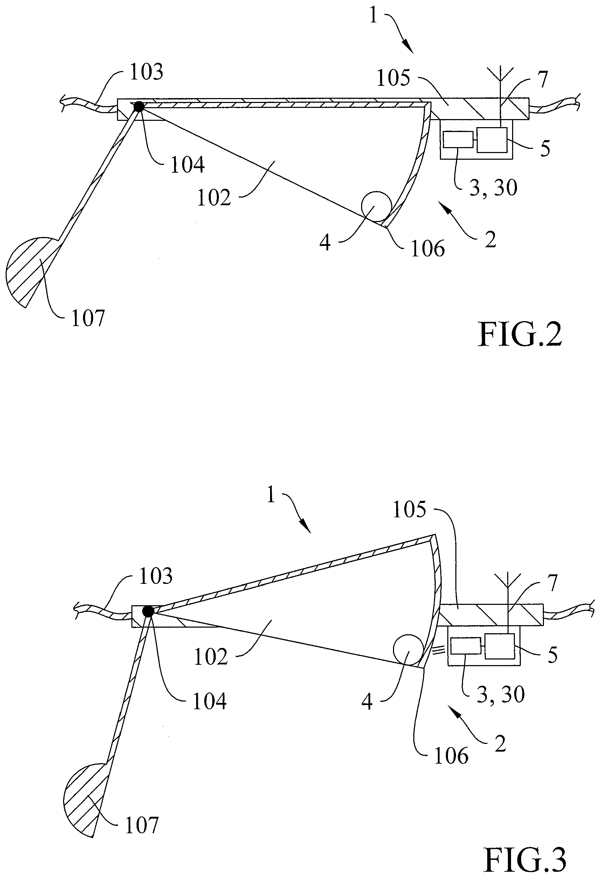

The flap 102 substantially has the shape of an internally hollow triangular prism devoid of a face, said flap 102 having an edge 104 hinged to a side of a support frame 105 fastened to said wall 103 of the bag 101 (Fig. 2) and also a counterweight 107 which branches off from said edge 104. The support frame 105 is a structure externally surrounding the flap 102 and is fastened at an opening obtained on the surface of said wall 103 of the bag 101, said opening being in communication with the outside by means of the flap 102 (Fig. 1).

When the lawn mower 100 is in operation, the flap 102 is configured to lift up under the action of the air flux generated by the rotation of the cutting blade, circulating inside the bag 101, while the counterweight 107 keeps the right balance. Said air flux conveys the grass clippings inside the bag 101 towards the rear part where they accumulate. The flap 102 may lift up only if the bag 101 is not completely filled up with grass, or in a condition of bag 101 not full, so that inside the bag 101 there is a volume available for the circulation of the air flux.

Therefore, the flap 102 is also configured to lower down in a condition of full bag 101, or in the absence of air inside the bag 101, since it is completely filled up with grass and there is no more free volume inside.

The lawn mower 100, according to the present invention, provides for an apparatus 1 for detecting and signaling the bag 101 condition, comprising at least one proximity sensor 2 configured to detect a change in the position of the flap 102 arranged on the wall 103 of the bag 101 and signaling means 6 adapted to warn the operator about the bag 101 conditions.

In particular, the detection and signaling apparatus 1 is configured to detect by means of the proximity sensor 2 when said flap 102 is lifted up or lowered down, and to issue by means of the signaling means 6 a first warning signal, adapted to indicate that the collecting bag 101 is properly mounted on the lawn mower 100, or a second warning signal, adapted to indicate that the collecting bag 101 is full, respectively.

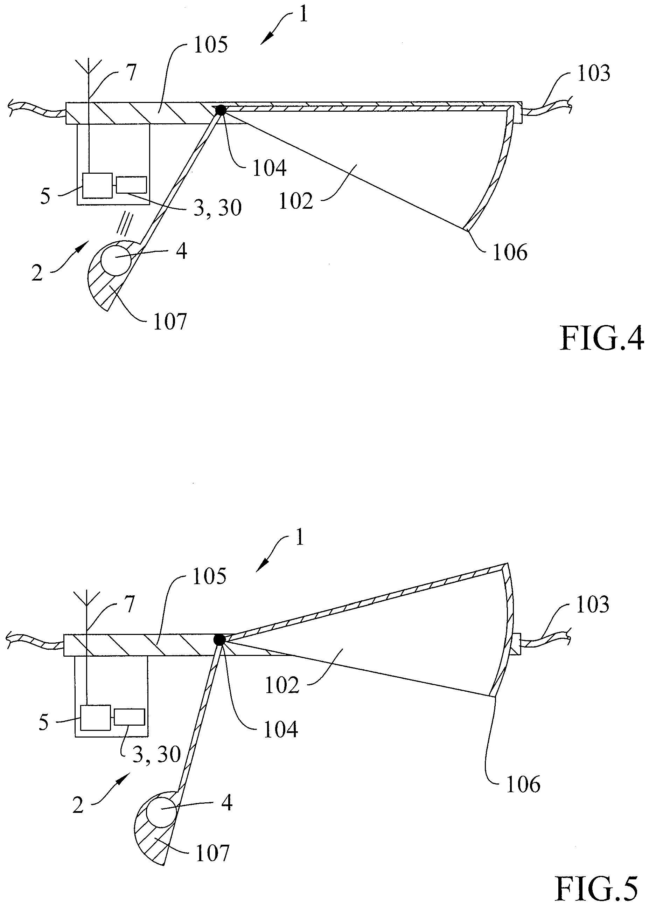

The proximity sensor 2 (Figs. 2-5) comprises a detection element 3, 30, integral with a support frame 105 to which said flap 102 is hinged, and a detectable element 4, placed on said flap 102 so as to be arranged in the proximity of the detection element 3, 30 when the flap 102 is lifted up (Fig. 3) or, alternatively, when the flap 102 lowered down (Fig. 4).

Furthermore, the proximity sensor 2 comprises a battery powered electronic board 5 programmed to generate said first warning signal or said second warning signal when said detectable element 4 is approached to or removed from the detection element 3, 30.

Preferably, the proximity sensor 2 is a magnetic sensor. For example, the proximity sensor may be of a Reed type and comprise a ferromagnetic material blade switch 3 interacting with a permanent magnet 4. This is a normally open switch 3, in which the two blades are partially overlapping and separated one another in a rest position. The operation principle is the one according to which, when the magnet 4 approaches the switch 3, the two blades touch due to the effect of the magnetic field (closed switch), or separate when the magnet 4 is removed (open switch).

As shown in Figs. 2-5, the blade switch 3 is integral with the support frame 105 fastened to the bag 101, while the permanent magnet 4 is placed on the flap 102 so that the magnet 4 is movable with respect to the switch 3, which will be closed or open due to the magnetic field effect, depending on the position of the flap 102.

In a first embodiment (Figs. 2, 3), the permanent magnet 4 is placed at an edge 106 of said prism, opposite with respect to the one (edge 104) in which the flap 102 is hinged, and particularly the one facing towards the inside of the collecting bag 101, thus, when the flap 102 is lifted up, the magnet 4 is arranged in the proximity of the switch 3, which shall therefore be closed (Fig. 3), while when the flap 102 is lowered down, the magnet 4 is far from switch 3 which shall therefore be open (Fig. 2).

In a second embodiment (Fig. 4, 5), the positioning of the proximity sensor 2 may still occur on the support frame 105, although at the edge 104 wherein the flap 102 is hinged. In particular, the magnet 4 shall be placed at the counterweight 107 of the flap 102, while the switch 3 is fastened on the opposite side of the support frame 105. Thus, when the flap 102 is lowered down, the magnet 4 is arranged in the proximity of the switch 3 which shall therefore be closed (Fig. 4), while, when the flap 102 is lifted up, the magnet 4 is away from the switch 3 which shall therefore be open (Fig. 5).

Alternatively to the Reed type magnetic sensor a Hall type magnetic sensor 30 may be used. Also in this case the sensor 30 is coupled to said permanent magnet 4 and is adapted to detect the variations of the magnetic field flux when the magnet 4 is approached or removed, depending on the position of said flap 102.

Generally, any proximity sensor able to sense the position of the flap 102 may be used, although, for descriptive simplicity, reference will be made below to the two examples of magnetic sensors described above.

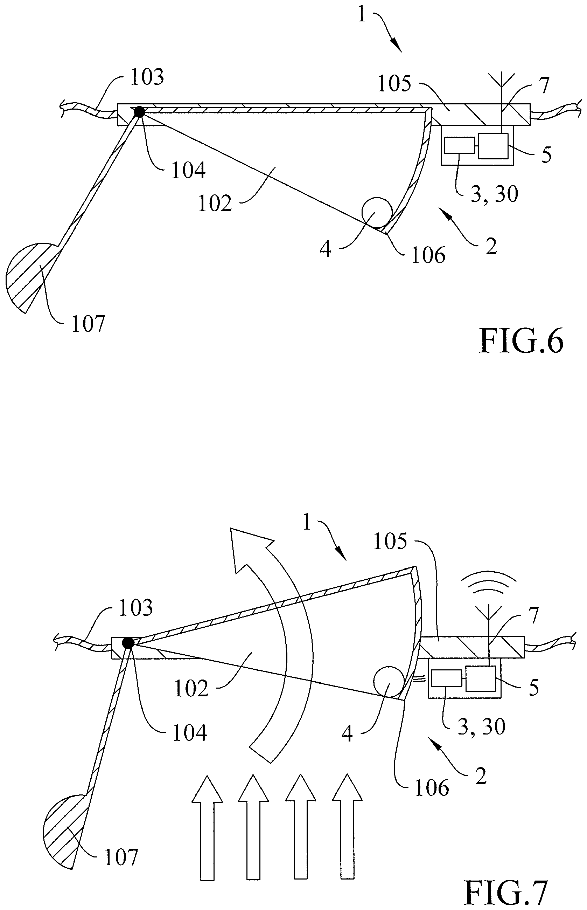

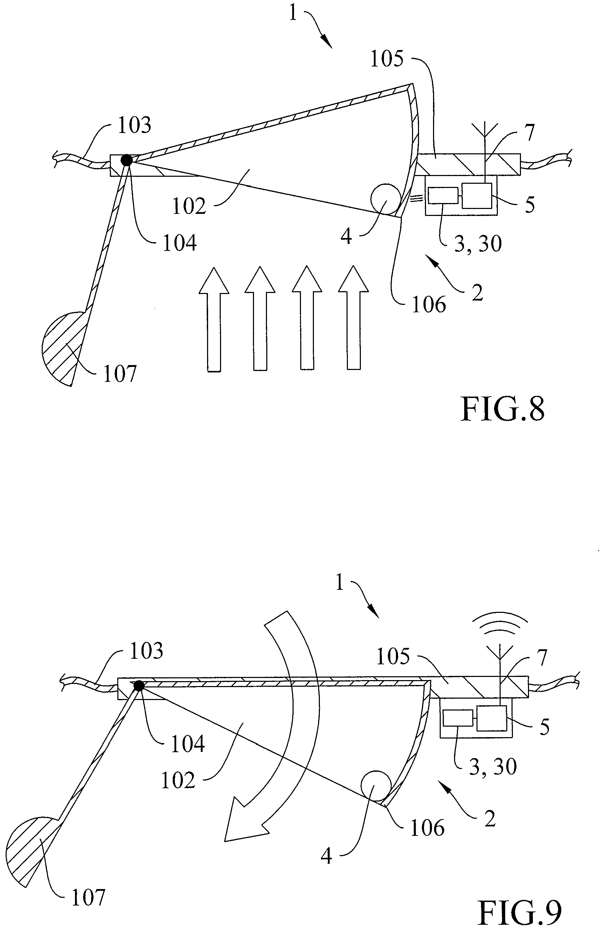

In the embodiment of Figs. 2, 3, in case of a Reed type proximity sensor 2, the electronic board 5 is programmed to generate said first warning signal when the switch 3 switches from the open state to the closed state (Fig. 7), or to generate said second warning signal, when the switch 3 switches from the closed state to the open state (Fig. 9). Differently, in case a Hall effect type proximity sensor 2 is used, the electronic board 5 is programmed to generate said first warning signal when the sensor 30 detects the variation in the magnetic field flux when the magnet 4 is approached (Fig. 7), or to generate said second warning signal when the sensor 30 detects the variation in the magnetic field flux when the magnet 4 is removed (Fig. 9).

In the second embodiment of Figs. 6, 7, the operation is analogous but inverted. For example, with the Reed type proximity sensor 2, the electronic board 5 shall be programmed to generate said first warning signal when the switch 3 switches from the closed state to the open state, or to generate said second warning signal when the switch 3 switches from the open state to the closed state. In the same way, in case of a Hall effect type proximity sensor 2, the electronic board 5 shall be programmed to generate said first warning signal when the sensor 30 detects the variation in the magnetic field flux when removed from the magnet 4, or to generate said second warning signal when the sensor 30 detects the variation in the magnetic field flux when the magnet 4 is approached.

Furthermore, the electronic board 5 implements an anti-bounce filter, which enables the sending of the warning signal by means of the transmitter 7 if the change of state of the flap 102 is stable for at least 4 seconds. Such filter implemented in the electronic board 5 prevents the erroneous transmission of false signals generated by abnormal oscillations of the flap 102 and, consequently, prevents false signaling to the operator about the filling level of the bag 101 and preserves power, in case of battery power, enhancing the autonomy thereof up to 10 years.

The signaling means 6, onboard the lawn mower 100 (Fig. 1) are adapted to receive said first or second warning signal from the proximity sensor 2 and to warn the operator by means of a visual and/or acoustic signal about the condition of the collecting bag.

The magnetic proximity sensor 2 may be connected to the signaling means 6 both by means of a physical connection, and by means of a wireless connection. In the preferred case of a wireless connection, the proximity sensor 2 comprises a transmitter 7 adapted to send via radio said first and second warning signals to said signaling means 6 when the proximity sensor 2 detect the opening or the closing of the flap 102 (Figs. 2-5).

Said signaling means 6 comprise at least one receiver adapted to receive said first and second warning signals transmitted by the proximity sensor 2, an onboard electronic board of the lawn mower 100 adapted to process said warning signals, and at least one display 9 and/or a speaker configured to warn the operator about the bag 101 condition by means of a visual signal and an acoustic signal, respectively.

The display 9 and speaker are configured to be active when the motor of the lawn mower is turned on and to issue, as a result of the processing of the first warning signal, an acoustic signal with a visual signal, such as, for example, the appearance on the display 9 of a green box and/or a "BAG PRESENT" message, or to issue, as a result of the processing of the second warning signal, an acoustic signal with a visual signal, such as, for example, the appearance on the display (9) of a red box and/or a "BAG FULL" message.

In operation, for descriptive simplicity, reference will be made to the first embodiment of Figs. 2, 3, being the one of the second embodiment of Figs. 4, 5 analogous but with inverted operating conditions.

Until the lawn mower 100 is turned off, the flap 102 is closed and the apparatus 1 for detecting and signaling the bag 101 condition is not active (Fig. 6). When the lawn mower 100 is turned on by the operator, if the collecting bag 101 is properly mounted to the lawn mower 100 and is not completely filled up with grass, the flap 102 is lifted up under the action of the air flux generated by the rotation of the cutting blade and circulating inside of the bag 101 (Fig. 7). The apparatus 1 for detecting and signaling the bag 101 condition detects, by means of the proximity sensor 2, the opening of the flap 102 (bag present). The proximity sensor 2 shall generate and send by means of the transmitter 7 said first warning signal to the signaling means 6, which shall indicate to the operator that the collecting bag 101 is properly mounted. As mentioned, an acoustic signal with a visual signal may be issued and, for example, a green box and/or a "BAG PRESENT" message may appear on the display 9.

During the operation, if the collecting bag 101 is not completely filled up with grass, the flap 102 will be open, still under the action of the air flux generated by the rotation of the cutting blade and circulating inside the bag 101 (Fig. 8).

When the collecting bag 101 is completely filled up with grass, the flap 102 is lowered down since there is no more air inside the collecting bag 101, in the absence of free volume inside the bag 101 itself. The apparatus 1 for detecting and signaling the bag 101 condition detects, by means of the proximity sensor 2, the closing of the flap 102 (full bag) (Fig. 9). The same proximity sensor 2 shall generate and send said second signal to the signaling means 6, which, in case the motor of the lawn mower is turned on, shall indicate to the operator that the collecting bag 101 is full and an acoustic signal with a visual signal shall be issued such as, for example, the appearance of a red box and/or a "BAG FULL" message on the display 9.

However, by virtue of the detection and signaling apparatus 1 comprised in the lawn mower 100 according to the present invention, the reliability of the flap 102 will be provided, associated with the potential of the sensing system, so as to warn the operator about the collecting bag 101 conditions and the working state thereof in an evident manner.

The detection and signaling apparatus 1 may be comprised in further types of lawn mowing machines other than the rear pushing one shown in Fig. 1, such as, for example, a lawn mowing tractor.

## Claims

1. Lawn mower (100) provided with a flap (102) disposed on a wall (103) of a bag (101) for collecting grass, said flap (102) being configured to lift up under the action of air circulating inside the bag (101) when the mower (100) is in operation and the bag (101) is not completely full, and also to lower down in air absence when the bag (101) is completely full, the lawn mower (100) comprises an apparatus (1) for detecting and signaling the bag (101) condition, said apparatus (1) being provided with signaling means (6) suitable to advise the operator about the bag (101) condition,
**characterized in that** said apparatus (1) is provided with at least one proximity sensor (2) configured to detect a change in flap (102) position.

2. Lawn mower (100) according to claim 1, **characterized in that** said detection and signaling apparatus (1) is configured to detect by means of the proximity sensor (2) when said flap (102) is lifted up or lowered down, and to issue by means of the signaling means (6) a first warning signal suitable to indicate that collecting bag (101) is properly mounted on the mower (100), or a second warning signal suitable to indicate that the collecting bag (101) is full, respectively.

3. Lawn mower (100) according to claim 2, **characterized in that** said proximity sensor (2) comprises:
a detection element (3, 30), integral with a support frame (105) to which said flap (102) is hinged,
a detectable element (4), placed on said flap (102) which is movable with respect to the support frame (105) so that detectable element (4) is placed in the proximity of the detection element (3, 30) when the flap (102) is lifted up or alternatively, when the flap (102) is lowered down,
an electronic board (5) programmed to generate said first warning signal or said second warning signal when said detectable element (4) is sensed in proximity of detection element (3, 30).

4. Lawn mower (100) according to claim 3, **characterized in that** said flap (102) has substantially the shape of an internally hollow triangular prism which is devoid of a face, with an edge (104) hinged to a side of said frame of support (105) and a counterweight (107) which branches off from said edge (104), said detectable element (4) being placed in correspondence of an edge (106) of the prism which is opposite to the one wherein the flap (102) is hinged so as to be perceived by the detection element (3, 30) when the flap (102) is lifted up.

5. Lawn mower (100) according to claim 4, **characterized in that** said proximity sensor (2) is a Reed type magnetic sensor wherein said detection element (3, 30) is a foil switch (3), and wherein said detectable element (4) is a permanent magnet, said electronic board (5) being programmed to generate said first warning signal when the switch (3) switches from the open state to the closed state, or to generate said second warning signal, when the switch (3) switches from the closed state to the open state.

6. Lawn mower (100) according to claim 4, **characterized in that** said proximity sensor (2) is an Hall effect type magnetic sensor (30) wherein said detectable element (4) is a permanent magnet, said electronic board (5) being programmed to generate said first warning signal when the sensor (30) detects variation of the magnetic field flux due to the approaching of the magnet (4), or for generating the second warning signal when the sensor (30) detects variation in the field flux due to removal of the magnet (4).

7. Lawn mower (100) according to claim 3, **characterized in that** said flap (102) has substantially the shape of an internally hollow triangular prism which is devoid of a face, with an edge (104) hinged to a side of said frame of support (105) and a counterweight (107) which branches off from said edge (104), said detectable element (4) being placed at the free end of said counterweight (107) and said detection element (3, 30) being placed on the support frame (105) in order to perceive the detectable element (4) when the flap (102) is lowered down.

8. Lawn mower (100) according to claim 7, **characterized in that** said proximity sensor (2) is a Reed type magnetic sensor wherein said detection element (3, 30) is a foil switch (3) and wherein said detectable element (4) is a permanent magnet, said electronic board (5) being programmed to generate said first warning signal when the switch (3) switches from the closed state to the open state, or to generate said second warning signal when the switch (3) switches from the open state to the closed state.

9. Lawn mower (100) according to claim 7, **characterized in that** said proximity sensor (2) is an Hall effect type magnetic sensor (30) wherein said detectable element (4) is a permanent magnet, said electronic board (5) is programmed to generate said first warning signal, when the detection element (3,30) detects variation of the magnetic field flux due to removal of the magnet (4), or for generating said second signal warning, when the sensitive element (30) detects variation of the magnetic field flux due to the approaching of the magnet (4).

10. Lawn mower (100) according to claim 2, **characterized in that** said proximity sensor (2) comprises a transmitter (7) suitable to send via radio said first and second warning signals to said signaling means (6) which are present in the mower (100) when the proximity sensor (2) detects the uplift or the drop of said flap (102).

11. Lawn mower (100) according to claim 2, **characterized in that** said signaling means (6) comprise:
a receiver suitable to receive said first and second warning signals transmitted from said proximity sensor (2),
an onboard electric board of the mower (100), which is active when the lawn mower is turned on, suitable for processing said first and second warning signals, and
at least one display (9) and/or a speaker configured to warning the operator about the bag (101) condition through a visual and/or acoustic signal, respectively.

12. Lawn mower (100) according to claim 11, **characterized in that** said display (9) and speaker are configured to be active when the motor of the mower is turned on and to issue, as a result of the elaboration of the first warning signal, an acoustic signal with a visual signal, such as the appearance on the display (9) of a green box and/or a "BAG PRESENT" message, or to issue, as a result of elaboration of the second warning signal, an acoustic signal with a visual signal, such as the appearance on the display (9) of a red box and/or a "FULL BAG" message.

13. Lawn mower (100) according to any one of the preceding claims, **characterized in that** said electronic board (5) is battery powered.

14. Lawn mower (100) according to any one of the preceding claims, **characterized in that** said electronic board (5) implements an anti-bounce filter suitable to enable the sending of the warning signal by the transmitter (7) if the change of state of the flap (102) is stable for at least 4 seconds, said filter being suitable to prevent the erroneous transmission of false signals generated by abnormal oscillations of the flap (102) and, consequently, false alerts to the operator about the filling level of the bag (101), preserving battery power.

## Patentansprüche

1. Rasenmäher (100), der mit einer Klappe (102) versehen ist, die an einer Wand (103) eines Beutels (101) zum Sammeln von Gras angeordnet ist, wobei die Klappe (102) dazu ausgebildet ist, sich unter der Wirkung von im Inneren des Beutels (101) zirkulierender Luft anzuheben, wenn der Rasenmäher (100) in Betrieb ist und der Beutel (101) nicht vollständig voll ist, sowie auch dazu ausgebildet ist, sich bei Abwesenheit von Luft nach unten abzusenken, wenn der Beutel (101) vollständig voll ist, wobei der Rasenmäher (100) eine Vorrichtung (1) aufweist zum Erfassen und Signalisieren des Zustands des Beutels (101), wobei die Vorrichtung (1) mit Signalisierungseinrichtungen (6) versehen ist, die dazu geeignet sind, die Bedienungsperson über den Zustand des Beutels (101) zu informieren,
**dadurch gekennzeichnet, dass** die Vorrichtung (1) mit mindestens einem Näherungssensor (2) versehen ist, der dazu ausgebildet ist, eine Änderung der Position der Klappe (102) zu erfassen.

2. Rasenmäher (100) nach Anspruch 1,
**dadurch gekennzeichnet, dass** die Erfassungs- und Signalisierungsvorrichtung (1) dazu ausgebildet ist, mittels des Näherungssensors (2) zu erfassen, wenn die Klappe (102) angehoben oder abgesenkt wird, und mittels der Signalisierungseinrichtungen (6) ein erstes Warnsignal abzugeben, das geeignet ist, um anzuzeigen, dass der Sammelbeutel (101) ordnungsgemäß an dem Rasenmäher (100) angebracht ist, oder ein zweites Warnsignal abzugeben, das geeignet ist, um anzuzeigen, dass der Sammelbeutel (101) voll ist.

3. Rasenmäher (100) nach Anspruch 2,
**dadurch gekennzeichnet, dass** der Näherungssensor (2) aufweist:
ein Erfassungselement (3, 30), das in einen Stützrahmen (105) integriert ist, an dem die Klappe (102) angelenkt ist,
ein erfassbares Element (4), das auf der Klappe (102) angeordnet ist, die in Bezug auf den Stützrahmen (105) beweglich ist, so dass das erfassbare Element (4) in der Nähe des Erfassungselements (3, 30) angeordnet ist, wenn die Klappe (102) angehoben wird, oder alternativ, wenn die Klappe (102) abgesenkt wird,
eine Elektronikplatine (5), die dazu programmiert ist, das erste Warnsignal oder das zweite Warnsignal zu erzeugen, wenn das erfassbare Element (4) in der Nähe des Erfassungselements (3, 30) erfasst wird.

4. Rasenmäher (100) nach Anspruch 3,
**dadurch gekennzeichnet, dass** die Klappe (102) im Wesentlichen die Form eines innen hohlen dreieckigen Prismas aufweist, an dem eine Fläche fehlt, wobei eine Kante (104) an einer Seite des Stützrahmens (105) angelenkt ist, sowie ein Gegengewicht (107) aufweist, das von der Kante (104) abzweigt, wobei das erfassbare Element (4) in Übereinstimmung mit einer Kante (106) des Prismas angeordnet ist, die derjenigen gegenüberliegt, an der die Klappe (102) angelenkt ist, so dass es von dem Erfassungselement (3, 30) wahrgenommen wird, wenn die Klappe (102) angehoben wird.

5. Rasenmäher (100) nach Anspruch 4,
**dadurch gekennzeichnet, dass** der Näherungssensor (2) ein Reed-Magnetsensor ist, wobei das Erfassungselement (3, 30) ein Folienschalter (3) ist, und wobei das erfassbare Element (4) ein Permanentmagnet ist, wobei die Elektronikplatine (5) derart programmiert ist, dass das erste Warnsignal erzeugt wird, wenn der Schalter (3) von dem offenen Zustand in den geschlossenen Zustand schaltet, oder das zweite Warnsignal erzeugt wird, wenn der Schalter (3) von dem geschlossenen Zustand in den offenen Zustand schaltet.

6. Rasenmäher (100) nach Anspruch 4,
**dadurch gekennzeichnet, dass** der Näherungssensor (2) ein Hall-Effekt-Magnetsensor (30) ist, wobei das erfassbare Element (4) ein Permanentmagnet ist, wobei die Elektronikplatine (5) derart programmiert ist, dass das erste Warnsignal erzeugt wird, wenn der Sensor (30) eine Änderung des Magnetfeldflusses aufgrund der Annäherung des Magneten (4) erfasst, oder das zweite Warnsignal erzeugt wird, wenn der Sensor (30) eine Änderung des Magnetfeldflusses aufgrund einer Entfernung des Magneten (4) erfasst.

7. Rasenmäher (100) nach Anspruch 3,
**dadurch gekennzeichnet, dass** die Klappe (102) im Wesentlichen die Form eines innen hohlen dreieckigen Prismas aufweist, bei dem eine Fläche fehlt, wobei eine Kante (104) an einer Seite des Stützrahmens (105) angelenkt ist, sowie ein Gegengewicht (107) aufweist, das von der Kante (104) abzweigt,
wobei das erfassbare Element (4) an dem freien Ende des Gegengewichts (107) angeordnet ist und das Erfassungselement (3, 30) an dem Stützrahmen (105) angeordnet ist, um das erfassbare Element (4) wahrzunehmen, wenn die Klappe (102) abgesenkt wird.

8. Rasenmäher (100) nach Anspruch 7,
**dadurch gekennzeichnet, dass** der Näherungssensor (2) ein Reed-Magnetsensor ist, wobei das Erfassungselement (3, 30) ein Folienschalter (3) ist und wobei das erfassbare Element (4) ein Permanentmagnet ist, wobei die Elektronikplatine (5) derart programmiert ist, dass das erste Warnsignal erzeugt wird, wenn der Schalter (3) von dem geschlossenen Zustand in den offenen Zustand schaltet, oder das zweite Warnsignal erzeugt wird, wenn der Schalter (3) von dem offenen Zustand in den geschlossenen Zustand schaltet.

9. Rasenmäher (100) nach Anspruch 7,
**dadurch gekennzeichnet, dass** der Näherungssensor (2) ein Hall-Effekt-Magnetsensor (30) ist, wobei das erfassbare Element (4) ein Permanentmagnet ist, wobei die Elektronikplatine (5) derart programmiert ist, dass das erste Warnsignal erzeugt wird, wenn das Erfassungselement (3, 30) eine Änderung des Magnetfeldflusses aufgrund einer Entfernung des Magneten (4) erfasst, oder das zweite Warnsignal erzeugt wird, wenn das Erfassungselement (30) eine Änderung des Magnetfeldflusses aufgrund der Annäherung des Magneten (4) erfasst.

10. Rasenmäher (100) nach Anspruch 2,
**dadurch gekennzeichnet, dass** der Näherungssensor (2) einen Sender (7) aufweist, der dazu ausgebildet ist, das erste und das zweite Warnsignal über Funk an die in dem Rasenmäher (100) vorhandenen Signalisierungseinrichtungen (6) zu senden, wenn der Näherungssensor (2) das Anheben oder das Absenken der Klappe (102) erfasst.

11. Rasenmäher (100) nach Anspruch 2,
**dadurch gekennzeichnet, dass** die Signalisierungseinrichtungen (6) aufweisen:
einen Empfänger (8), der zum Empfangen des ersten und zweiten Warnsignals geeignet ist, die von dem Näherungssensor (2) gesendet werden, eine bordeigene elektrische Platine des Rasenmähers (100), die aktiv ist, wenn der Rasenmäher eingeschaltet ist und die zum Verarbeiten des ersten und zweiten Warnsignals geeignet ist, und
mindestens eine Anzeige (9) und/oder einen Lautsprecher, die dazu ausgebildet sind, die Bedienungsperson durch ein visuelles und/oder akustisches Signal über den Zustand des Beutels (101) zu warnen.

12. Rasenmäher (100) nach Anspruch 11,
**dadurch gekennzeichnet, dass** die Anzeige (9) und der Lautsprecher dazu ausgebildet sind, aktiv zu sein, wenn der Motor des Rasenmähers eingeschaltet ist, und als Ergebnis der Ausgestaltung des ersten Warnsignals ein akustisches Signal mit einem visuellen Signal abzugeben, wie z.B. das Erscheinen eines grünen Kästchens und/oder einer Mitteilung "BEUTEL VORHANDEN" auf der Anzeige, oder als Ergebnis der Ausgestaltung des zweiten Warnsignals ein akustisches Signal mit einem visuellen Signal abzugeben, wie z.B. das Erscheinen eines roten Kästchens und/oder einer Mitteilung "BEUTEL VOLL" auf der Anzeige (9).

13. Rasenmäher (100) nach einem der vorhergehenden Ansprüche,
**dadurch gekennzeichnet, dass** die Elektronikplatine (5) batteriebetrieben ist.

14. Rasenmäher (100) nach einem der vorhergehenden Ansprüche,
**dadurch gekennzeichnet, dass** die Elektronikplatine (5) ein Rückprallfilter implementiert, das geeignet ist, das Senden des Warnsignals durch den Sender (7) zu ermöglichen, wenn die Änderung des Zustands der Klappe (102) mindestens 4 Sekunden lang stabil ist, wobei das Filter geeignet ist, die fehlerhafte Übertragung von falschen Signalen zu verhindern, die durch abnormale Schwingungen der Klappe (102) erzeugt werden, und folglich falsche Warnungen an die Bedienungsperson über den Füllstand der Beutels (101) zu verhindern und dadurch Batterieleistung zu schonen.

## Revendications

1. Tondeuse à gazon (100) dotée d'un volet (102) disposé sur une paroi (103) d'un sac (101) pour collecter l'herbe, ledit volet (102) étant configuré pour se lever sous l'action de l'air circulant dans le sac (101) lorsque la tondeuse (100) est en fonctionnement et que le sac (101) n'est pas complètement rempli, et également pour s'abaisser en l'absence d'air lorsque le sac (101) est complètement rempli, la tondeuse à gazon (100) comprend un appareil (1) pour détecter et signaler l'état du sac (101), ledit appareil (1) étant prévu avec des moyens de signalisation (6) appropriés pour avertir l'opérateur concernant l'état du sac (101),
**caractérisée en ce que** ledit appareil (1) est prévu avec au moins un capteur de proximité (2) configuré pour détecter un changement dans la position du volet (102).

2. Tondeuse à gazon (100) selon la revendication 1, **caractérisée en ce que** ledit appareil de détection et de signalisation (1) est configuré pour détecter au moyen du capteur de proximité (2) le moment où ledit volet (102) est levé ou abaissé, et pour émettre au moyen des moyens de signalisation (6), un premier signal d'avertissement approprié pour indiquer que le sac de collecte (101) est correctement monté sur la tondeuse (100), ou un second signal d'avertissement approprié pour indiquer que le sac de collecte (101) est plein, respectivement.

3. Tondeuse à gazon (100) selon la revendication 2, **caractérisée en ce que** ledit capteur de proximité (2) comprend :
un élément de détection (3, 30), solidaire d'un bâti de support (105) auquel ledit volet (102) est articulé,
un élément détectable (4), placé sur ledit volet (102) qui est mobile par rapport au bâti de support (105) de sorte que l'élément détectable (4) est placé à proximité de l'élément de détection (3, 30) lorsque le volet (102) est levé ou en variante, lorsque le volet (102) est abaissé,
une carte électronique (5) programmée pour générer ledit premier signal d'avertissement ou ledit second signal d'avertissement lorsque ledit élément détectable (4) est détecté à proximité de l'élément de détection (3, 30).

4. Tondeuse à gazon (100) selon la revendication 3, **caractérisée en ce que** ledit volet (102) a sensiblement la forme d'un prisme triangulaire intérieurement creux qui est dépourvu de face, avec un bord (104) articulé par rapport à un côté dudit bâti de support (105) et un contrepoids (107) qui bifurque dudit bord (104), ledit élément détectable (4) étant placé en correspondance d'un bord (106) du prisme qui est opposé à l'un auquel le volet (102) est articulé afin d'être perçu par l'élément de détection (3, 30) lorsque le volet (102) est levé.

5. Tondeuse à gazon (100) selon la revendication 4, **caractérisée en ce que** ledit capteur de proximité (2) est un capteur magnétique de type Reed, dans laquelle ledit élément de détection (3, 30) est un commutateur à feuille (3) et dans laquelle ledit élément détectable (4) est un aimant permanent, ladite carte électronique (5) étant programmée pour générer ledit premier signal d'avertissement lorsque le commutateur (3) passe de l'état ouvert à l'état fermé, ou pour générer ledit second signal d'avertissement, lorsque le commutateur (3) passe de l'état fermé à l'état ouvert.

6. Tondeuse à gazon (100) selon la revendication 4, **caractérisée en ce que** ledit capteur de proximité (2) est un capteur magnétique de type à effet Hall (30), dans laquelle ledit élément détectable (4) est un aimant permanent, ladite carte électronique (5) étant programmée pour générer ledit premier signal d'avertissement lorsque le capteur (30) détecte la variation du flux de champ magnétique due à l'approche de l'aimant (4) ou pour générer le second signal d'avertissement lorsque le capter (30) détecte la variation dans le flux de champ due au retrait de l'aimant (4).

7. Tondeuse à gazon (100) selon la revendication 3, **caractérisée en ce que** ledit volet (102) a sensiblement la forme d'un prisme triangulaire intérieurement creux qui est dépourvu de face, avec un bord (104) articulé par rapport à un côté dudit bâti de support (105) et un contrepoids (107) qui bifurque dudit bord (104), ledit élément détectable (4) étant placé au niveau de l'extrémité libre dudit contrepoids (107) et ledit élément de détection (3, 30) étant placé sur le bâti de support (105) afin de percevoir l'élément détectable (4) lorsque le volet (102) est abaissé.

8. Tondeuse à gazon (100) selon la revendication 7, **caractérisée en ce que** ledit capteur de proximité (2) est un capteur magnétique de type Reed, dans laquelle ledit élément de détection (3, 30) est un commutateur à feuille (3) et dans laquelle ledit élément détectable (4) est un aimant permanent, ladite carte électronique (5) étant programmée pour générer ledit premier signal d'avertissement lorsque le commutateur (3) passe de l'état fermé à l'état ouvert, ou pour générer ledit second signal d'avertissement lorsque le commutateur (3) passe de l'état ouvert à l'état fermé.

9. Tondeuse à gazon (100) selon la revendication 7, **caractérisée en ce que** ledit capteur de proximité (2) est un capteur magnétique de type à effet Hall (30), dans laquelle ledit élément détectable (4) est un aimant permanent, ladite carte électronique (5) est programmée pour générer ledit premier signal d'avertissement, lorsque l'élément de détection (3, 30) détecte la variation du flux de champ magnétique due au retrait de l'aimant (4) ou pour générer ledit second signal d'avertissement, lorsque l'élément sensible (30) détecte la variation du flux de champ magnétique due à l'approche de l'aimant (4).

10. Tondeuse à gazon (100) selon la revendication 2, **caractérisée en ce que** ledit capteur de proximité (2) comprend un émetteur (7) approprié pour envoyer, par radio, lesdits premier et second signaux d'avertissement auxdits moyens de signalisation (6) qui sont présents dans la tondeuse (100) lorsque le capteur de proximité (2) détecte la levée ou la chute dudit volet (102).

11. Tondeuse à gazon (100) selon la revendication 2, **caractérisée en ce que** lesdits moyens de signalisation (6) comprennent :
un dispositif de réception approprié pour recevoir lesdits premier et second signaux d'avertissement transmis à partir dudit capteur de proximité (2),
une carte électrique intégrée de la tondeuse (100) qui est active lorsque la tondeuse est mise en marche, appropriée pour traiter lesdits premier et second signaux d'avertissement, et
au moins un affichage (9) et/ou un haut-parleur configuré pour avertir l'opérateur concernant l'état du sac (101) par le biais d'un signal visuel et/ou acoustique, respectivement.

12. Tondeuse à gazon (100) selon la revendication 11, **caractérisée en ce que** ledit affichage (9) et le haut-parleur sont configurés pour être actifs lorsque le moteur de la tondeuse est mis en marche et pour émettre, suite à l'élaboration du premier signal d'avertissement, un signal acoustique avec un signal visuel, comme l'apparition sur l'affichage (9) d'un témoin vert et/ou d'un message « SAC PRESENT », ou pour émettre, suite à l'élaboration du second signal d'avertissement, un signal acoustique avec un signal visuel, comme l'apparition sur l'affichage (9) d'un témoin rouge et/ou d'un message « SAC PLEIN».

13. Tondeuse à gazon (100) selon l'une quelconque des revendications précédentes, **caractérisée en ce que** ladite carte électronique (5) est alimentée par batterie.

14. Tondeuse à gazon (100) selon l'une quelconque des revendications précédentes, **caractérisée en ce que** ladite carte électronique (5) met en œuvre un filtre anti-rebond approprié pour mettre l'envoi du signal d'avertissement par l'émetteur (7) si le changement d'état du volet (102) est stable pendant au moins 4 secondes, ledit filtre étant approprié pour empêcher la transmission erronée de faux signaux générés par des oscillations anormales du volet (102) et par conséquent de fausses alertes à l'opérateur concernant le niveau de remplissage du sac (101), préservant la puissance de la batterie.
